# EUROPÄISCHE PATENTANMELDUNG

(11) **EP 0 567 866 A1**
(43) Veröffentlichungstag der Anmeldung: **03.11.1993**
(21) Anmeldenummer: 93106218.6
(22) Anmeldetag: 16.04.1993
(51) Int. Cl.: C02F 9/00

(54) **Behandlung des Abwassers von Druckereien**

(30) Priorität: 25.04.1992 DE 4213674
(71) Anmelder: DORNIER GMBH, D-88004 Friedrichshafen (DE)
(72) Erfinder: Schmidt, Hans-Jürgen, Dr. Dipl.-Chem., W-7997 Immenstaad (DE); Reich, Joachim, Dipl.-Ing., W-7959 Mietingen (DE)
(74) Vertreter: Landsmann, Ralf, Dipl.-Ing.

(57) **Zusammenfassung**

Behandlung von hochbelastetem Abwasser von Reinigungsprozessen in Druckereien durch Oxidationsverfahren und nachfolgende Filtration.

## Beschreibung

Die Erfindung betrifft ein Verfahren, Druckereiabwässer, die durch Chemikalien und Siebdruckreste hochbelastet sind, zu einer rezyklisierungsfähigen Wasserqualität aufzubereiten, bei gleichzeitig geringerem Anfall weiter zu entsorgender abgetrennter Reststoffe.

Eine Verdünnung der Abwässer, um den Einleitungsgrenzwert für den chemischen Sauerstoffbedarf (CSB) einzuhalten und die Abwässer in die Kanalisation einleiten zu können, ist nicht mehr zulässig. Ein herkömmliches Verfahren der Reinigung von Abwasser, wie z.B. aus Siebdruckereien, ist die Emulsionsspaltung. Durch Zusetzen von Chemikalien werden die emulgierten und suspendierten Teilchen geflockt. Diese sedimentieren und lagern sich als Schlamm ab. Pro m³ Abwasser werden in der Regel bis zu ca. 3 kg Spaltmittel benötigt. Dies führt zu einer Schlammenge bis zu ca. 20 kg. Die Einhaltung der Einleitungsgrenzwerte für den CSB von etwa 600 mg/l kann wegen der veränderlichen Verschmutzung auf diesem Wege nicht garantiert werden. Die offensichtlichen Nachteile dieser Vorgehensweise liegen im hohen Chemikalienbedarf, den großen zu entsorgenden Schlammengen (in der Regel Sondermüll) und dem hohen Frischwasserverbrauch des Reinigungsprozesses.

Es besteht Bedarf für ökologisch optimierte Prozesse mit wirtschaftlich vertretbaren Aufwendungen hinsichtlich Investitionen und Betriebskosten.

Die Aufgabe der Erfindung ist es, bei einem Verfahren der eingangs beschriebenen Art den Frischwasserbedarf der Reinigung durch Aufbereitung und Kreislaufführung ebenso wie den Umfang der Restmengen bei gleichzeitig verbesserter Entsorgungsfähigkeit erheblich zu verringern.

Das erfindungsgemäße Verfahren der Aufbereitung mit mechanisch-physikalischen Trennstufen besteht aus der Kombination einer Oxidation des Abwassers als Vorbehandlung einer nachfolgenden Filtration. Der speziellen Rohwasserkontamination im charakteristischen Variationsbereich von Druckereiabwässern entsprechend können eine Ozonisierung, UV-Bestrahlung, katalytische Oxidation und die Kombination, und Mikrofiltration oder Ultrafiltration, auch mit Cross-Flow-Wasserführung, gewählt werden.

Die Erfindung wird nachfolgend anhand von Figuren näher erläutert.

Es zeigen:
- Fig. 1: ein Blockschaltbild mit den wesentlichen Prozeßschritten und Baueinheiten,
- Fig. 2: ein detailliertes Verfahrensschema beschrieben für Ozonisierung und Mikrofiltration.

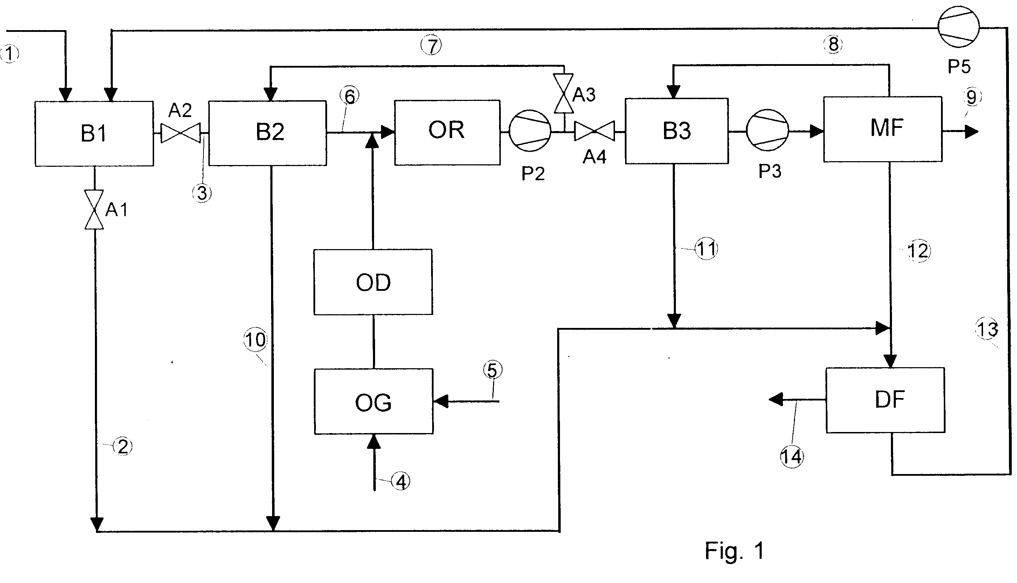

Ein mit der Leitung **1** bei laufendem Prozeß kontinuierlich in den Rohwasserbehälter **B1** eintretende Abwasserstrom wird hier für den getakteten Vorgang der Ozonisierung gemäß Fig. 1 gesammelt. Sich absetzender Schlamm kann über die Absperrung **A1** und die Leitung **2** dem zentralen Schlammsammler **SS** (z.B. ein Druckfilter) zugeführt werden. Die Erzeugung von Ozon im Generator **OG** erfolgt durch Zufuhr von Luft, **4**, und elektrischer Energie, **5**. Die Eindosierung **OD** in die Leitung **6** zwischen dem Arbeitsbehälter **B2** und dem Ozonreaktor **OR** entspricht der Beschaffenheit der Rohwassers. Bei geschlossener Absperrung **A4** und geöffneter Absperrung **A3** wird die Pumpe **P2** das Rohwassers im Zwischenkreis **B2-6-OR-P1-A3-7** umgewälzt, bis die Inhaltsstoffe bzw. ein Teil der Inhaltsstoffe des Abwassers oxidiert ist. Nach dieser Behandlung erfolgt durch Umstellung des Wasserstromes von **A3** auf **A4** die Beschickung des Behälters **B3**, dem Arbeits- und Vorlagebehälter der Mikrofiltration **MF**. Im zweiten Zwischenkreis **B3-P3-Mf-8** wird durch die Pumpe **P3** das vorbehandelte Rohwasser mit ansteigender Konzentration umgepumpt. Gereinigtes Wasser (Permeat) wird als Frischwasser über Leitung **9** dem Prozeß wieder zugeführt. Neben der Leitung **2** werden auch über die zusammengeführten Leitungen **10, 11** und **12** abgesetzter Schlamm oder reststoffhaltige Konzentrate über das Druckfilter **DF** geleitet. Abgesetztes Wasser, Leitung **13**, wird mit der Pumpe **P5** in den Behälter **B1** eingespeist. Der Schlamm wird über die auch absperrbare Leitung entsorgt.

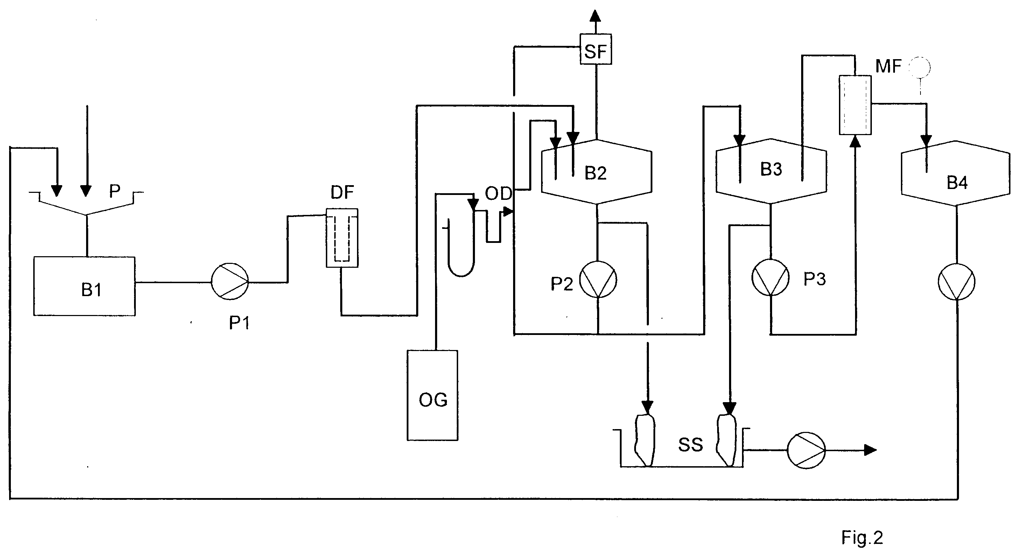

Das Verfahrensschema, Fig. 2, läßt die Einzelheiten der Abwasserbehandlung erkennen. Nach dem Gebrauch des Wassers in der Druckerei (Prozeß) **P** läuft das Schmutzwasser dem Vorlagebehälter **B1** zu. Bei nicht ausreichendem Gefälle wird das Rohwasser durch die Pumpe **P1** dem Druckfilter **DF** zugeführt und vorfiltriert. Diese Vorfiltration dient der Entfernung grober Verunreinigungen (Papierreste, Farbpigmente). Das vorfiltrierte Rohwasser fließt dem Behälter **B2** zu. Der Kreislauf mit Pumpe **P2**, Ozongenerator **OG** und Eindosierung **OD** sind erkennbar. Überschüssiges Ozon der teilweisen Oxidation der Inhaltsstoffe des Abwassers wird in einen Sicherheitsfilter **SF** geleitet und zerstört, bevor es als Sauerstoff in die Atmosphäre entweicht.

Diese Lösung wird nach mehrmaligem Durchlaufen dieses Prozeßschrittes in den Behälter **B3** gepumpt. Die Pumpe **P3** drückt die Lösung durch den Mikrofiltrationsmodul **MF**, das Konzentrat zurück in **B3**. Das Permeat fließt dem Sammelbehälter **B4** zu. Nach Erreichen eines vorgegebenen Füllstandes im Behälter **B3** wird die geringe abgesetzte Menge Schlamm (Mikroflockung) mit Hilfe von z.B. Schlammfiltersäcken filtriert und entsorgt; Abtropffilter und Schlammsammler **SS**. Diese Funktion kann auch über ein entsprechend ausgelegtes Druckfilter erfolgen. Der Permeat-Sammelbehälter **B4** dient auch als Wasservorlage für die periodische Rückspülung des Mikrofiltrationsmoduls **MF**.

Die erfindungsgemäße Anlage kann je nach Einsatzfall für einen Rohwasseranfall von 0,2 bis 13 m³/Tag dimensioniert werden. Pro 1 m³ Rohwasser sind bei etwa zweistündiger Behandlung bis zu 30 g Ozon und knapp 1 m³/h Trägerluft erforderlich. Die Taktzeiten der Oxidation, Umpumpen des Rohwassers im ersten Zwischenkreis werden ebenso wie der gesamte Prozeßablauf nach entsprechenden einsatzbezogenen Vorgaben der Prozeßparameter automatisch gesteuert (speicherprogrammierbare Steuerung). Die Rückspülung der Mikrofiltration **MF** erfolgt auch automatisch, und zwar periodisch aller 3 bis 30 min, mit einem Zeitaufwand von 5 bis 30 s (einstellbar).

Die einzelnen Verfahrensschritte, Sammler und Zwischenbehälter, Vorfiltration, Oxidationskreis und Filtration können verfahrenstechnisch dem Bedarf und durch Parallelanordnung der erforderlichen Kapazität angepaßt werden.

Erfindungsgemäß werden 90 bis 95 % weniger Schlamm produziert, somit Hilfsmittel und Aufwand für die Entsorgung reduziert. Das aufbereitete Wasser kann bis zu 1 Jahr im System verbleiben.

## Patentansprüche

1. Verfahren zur Behandlung von hochbelastetem Abwasser von Reinigungsprozessen in Druckereien, **gekennzeichnet durch** Oxidation der organischen Inhaltsstoffe mit Hilfe von Oxidationsverfahren wie Ozonisierung, UF-Bestrahlung, katalytische Oxidation oder einer Kombination dieser Oxidationsverfahren und eine nachfolgende Filtration, Mikrofiltration oder Ultrafiltration, des oxidierten Rohwassers.

2. Verfahren nach Anspruch 1, **gekennzeichnet durch** einen getakteten Betrieb des Oxidationskreises auch bei kontinuierlicher Rohwasserzufuhr.

3. Verfahren nach Ansprüchen 2 und 3, **gekennzeichnet durch** eine einsatzfallbezogene modulare Erweitetung/Parallelschaltung von Zwischenkreisen und Vorlagebehältern.

4. Verfahren nach Ansprüchen 1 bis 3, **gekennzeichnet durch** die Einsatzfähigkeit auch zur Aufbereitung von Abwässern der Flexofarbenherstellung, des Offsetdruckes und der Druckfarbenherstellung und aus Kraftfahrzeug-Wartungsbetrieben sowie der AOX-Reduzierung.
